# EUROPEAN PATENT SPECIFICATION

(11) **EP 1 825 166 B1**
(45) Date of publication and mention of the grant of the patent: **28.10.2009**
(21) Application number: 04806486.9
(22) Date of filing: 17.12.2004
(51) Int. Cl.: F16H 3/74, F16H 3/72, F16H 37/04

(54) **CONTINUOUSLY VARIABLE TRANSMISSION**
STUFENLOS VERSTELLBARES GETRIEBE
TRANSMISSION A VARIATION CONTINUE

(43) Date of publication of application: 29.08.2007
(73) Proprietor: Brena Pinero, Carlos Alberto, Oaxaca, Oax., 68000 (MX)
(72) Inventor: Brena Pinero, Carlos Alberto, Oaxaca, Oax., 68000 (MX)
(74) Representative: Alvarez, Fernando
(86) International application number: PCT/IB2004/004322
(87) International publication number: WO 2006/064308

(56) References cited:
- DE-A1- 3 713 722
- GB-A- 2 187 242
- US-A- 4 327 604
- US-A- 5 033 996
- US-A- 5 800 302
- US-B1- 6 387 004

## Description

The present invention relates to a Continuously Variable Transmission (CVT), i.e. a transmission with a ratio of torque and rotation speed between an input axle and an output axle, which can be varied gradually.

### Technical field

The transmission of the invention may be used, either in automotive vehicles or in industrial machinery (lathes, milling machines, etc.) where the transmission of power is carried out by means of gears, which makes possible to have an output of high torque and also high rotation speed if required.

### Background art

Continuously variable transmissions are used in particular in cars, scooters and industrial machines, which will be referred to in the following description, without restricting, however, the field of application of the invention.

In the known mechanical transmissions, different solutions have been found, in order to obtain transmissions that have the characteristic of carrying out a continuous variation of torque and speed of rotation. Among them, one can mention those that operate by means of friction, transmitting the power to variable radii, either by means of belts on cones, or by means of physical contact of rotating pieces.

Transmissions of that kind are limited, because they cannot transmit high torques when the mechanism is of small size, or in the opposite case, they take up too much space.

Other solutions applied in order to achieve the effect of continuous variation, have been the transmissions of hydraulic type, which modify the ratio between the pressure and the volume of flow corresponding to the input and output axles. Transmissions of this kind generally involve considerable energy losses and, in certain cases, they do not have the possibility of transmitting high rotation speeds. US 5 800 302 A discloses the features of the preamble of claim 1.

There are also assisted mechanisms, in which, besides the main engine, there is another motor of smaller power that takes part in the transmission, modifying the torque and speed of rotation of the output axle. The present invention is considered to be within this category, having the advantage compared to the similar transmissions of the prior art, that the additional motor (herein called servomotor) has an energy consumption considerably smaller than that of a servomotor of a similar known transmission, when both carry out the same work.

### Disclosure of the invention

The aim of the invention is to provide a continuously variable transmission, able to transmit high torques and high revolution speeds, taking up a small space, having the possibility of being regulated electronically, which allows to fulfill specific requirements of operation, either in an industrial or automotive application.

An advantage of this invention, in comparison with similar known transmissions, is that it uses for its operation a servomotor with smaller energy consumption and requiring a smaller space.

### BRIEF DESCRIPTION OF THE DRAWINGS

Figure 1 is a perspective view of the assembly of one preferred embodiment of the continuously variable transmission of torque and speed of rotation according to the invention.
Figure 2 is a perspective view of the separated parts of the preferred embodiment shown in Figure 1. In this drawing the gear teeth are not represented in detail but are instead symbolized by means of lines.
Figure 3 is a diagram of the assembly of the preferred embodiment shown in Figures 1 and 2, delineating its location within a housing and showing directions for the electronic control of this embodiment.
Figure 4 is a perspective view of the assembly of another preferred embodiment of the continuously variable transmission of torque and speed of rotation according to this invention.

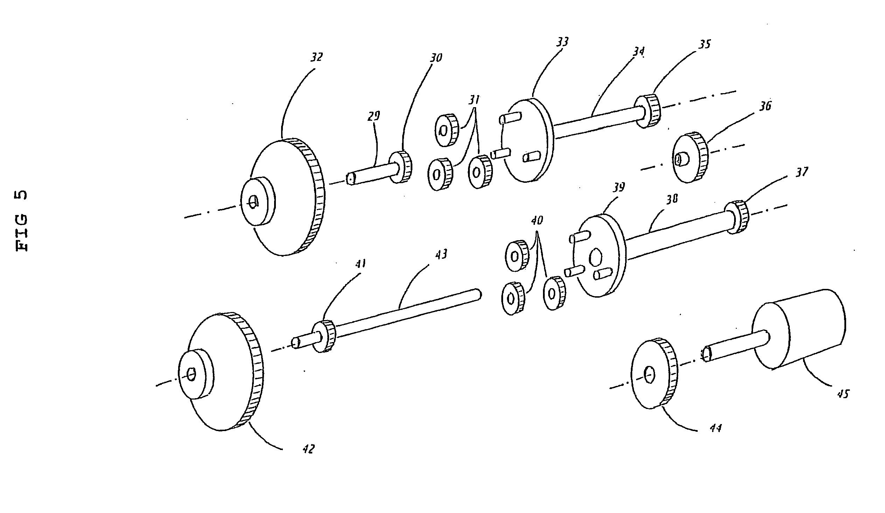

Figure 5 is a perspective view of the separated parts of the preferred embodiment shown in Figure 4. In this drawing the gear teeth are not represented in detail but are instead symbolized by means of lines.

### PREFERRED MODES FOR CARRYING OUT THE INVENTION

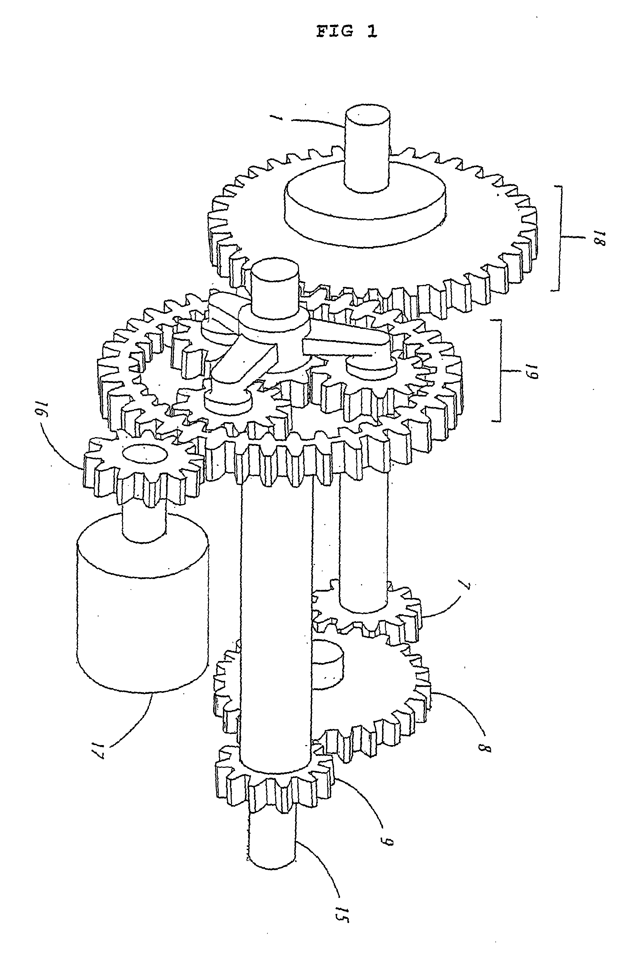

Figure 1 shows a perspective view of the assembly of one of the preferred embodiments of the mechanism of the continuously variable transmission of torque and rotation speed, which shows the general arrangement of the mechanism. That mechanism is characterized by two planetary gear sets (18 and 19) which have gear teeth on their external perimeters, three gears for the equalization of the sense of rotation (7, 8 and 9), a servomotor (17), a servomotor gear (16), a plurality of axles, among which the input axle (1) and the output axle (15) are identified.

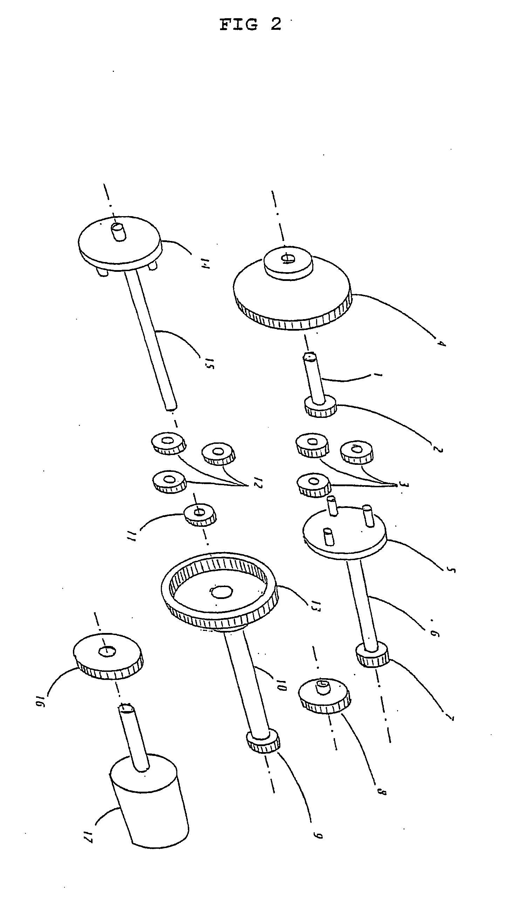

Figure 2 shows a perspective view of the separated parts of the preferred' embodiments shown in Figure 1. In that drawing the gear teeth are not represented in detail but are instead symbolized by means of lines. In the view of Figure 2, the asymmetric position of the planetary carriers (5 and 14) is shown. That is to say: looking at the plane perpendicular to the ring gear axles (4 and 13), the planetary carrier (5) is on one side, and the planetary carrier (14) is on the other side.

The operation of the mechanism is the following:

The torque and rotation speed that are desired to be transformed in a continuously variable way, are received by axle (1), which is joined together, or makes up one piece with the solar gear (2). The rotation of the solar gear (2) is transmitted to the planetary gears (3), which are located on its periphery. The number of those planetary gears may vary. There may be one or several planetary gears, however it is generally advisable to have three or four planetary gears in order to attain an adequate distribution of the force transmitted to them. The planetary gears (3) mesh with the ring gear (4) internal teeth, which are pushed in the direction of the tangential force imparted to them by the above-mentioned planetary gears. This tendency of rotation of the ring gear (4) is opposed to the tendency of rotation of the ring gear (13). The reason for this opposition will be seen herein below.

When the planetary gears (3) encounter a support on the internal teeth of the ring gear (4), they rotate the planetary carrier (5), the axle (6) and the gear (7). These three components are joined together. It is advisable to make gear (7) removable.

The gear (7) transmits its sense of rotation to gear (9) by means of gear (8), and this way, the axles (10 and 6) rotate in the same sense of rotation, observed on the same plane.

The axle (10) is tubular and rotates the solar gear (11) that is joined to it. It is advisable to make this union by means of grooves, in order to facilitate the assembling and disassembling of the ring gear (13).

The rotation of the solar gear (11) is transmitted to the planetary gears (12), which mesh with the internal teeth of the ring gear (13) , that are pushed in the direction of the tangential force imparted by those planetary gears. The tendency of rotation of the ring gear (13) is opposed to the tendency of rotation of the ring gear (4), because the sense of rotation of axle (6) and the sense of rotation of axle (10) have been made to be the same. This opposition of the tendencies of rotation of the ring gears (4 and 13) causes that both ring gears function as supports of the planetary gears (3 and 12) , transmitting the torque and the speed of rotation, respectively to the planetary carriers (5 and 14). In this way, when the planetary gears (12) encounter a support on the internal teeth of the ring gear (13), they rotate the planetary carrier (14) and the output axle (15), which is joined together or is considered to make up one piece with this planetary carrier.

The output axle (15) passes freely through the tubular axle (10) and the gear (9) in order to make easier the placing of an engine on the side of the axle (1), although this space might not be necessary in certain applications, in which the axle (10) does not need to be tubular and axles (1 and 15) are on the same side.

As the person skilled in the art will easily understand the mechanism makes two reductions of the number of turns, between the input axle (1) and the output axle (15), and therefore, makes two increases of the torque. The first reduction is accomplished in the planetary gear set (18) and the second reduction is accomplished in the planetary gear set (19).
in which the axle (10) does not need to be tubular and axles (1 and 15) are on the same side.

As the person skilled in the art will easily understand the mechanism makes two reductions of the number of turns, between the input axle (1) and the output axle (15), and therefore, makes two increases of the torque. The first reduction is accomplished in the planetary gear set (18) and the second reduction is accomplished in the planetary gear set (19).

So far, it has been considered that the gears (7 and 9) have the same diameter and number of teeth. This may however vary, if desired, and this way, the magnitude of the transmission ratio between the axles (1 and 15) is modified. Now, the magnitude of the transmission ratio between the axles (1 and 15) may be modified in a continuously variable way, rotating the ring gears (4 and 13), by means of the gear (16), which is rotated in one sense of rotation or the other, by the servomotor (17).

The sense of rotation and the speed of rotation of this servomotor may be regulated automatically.

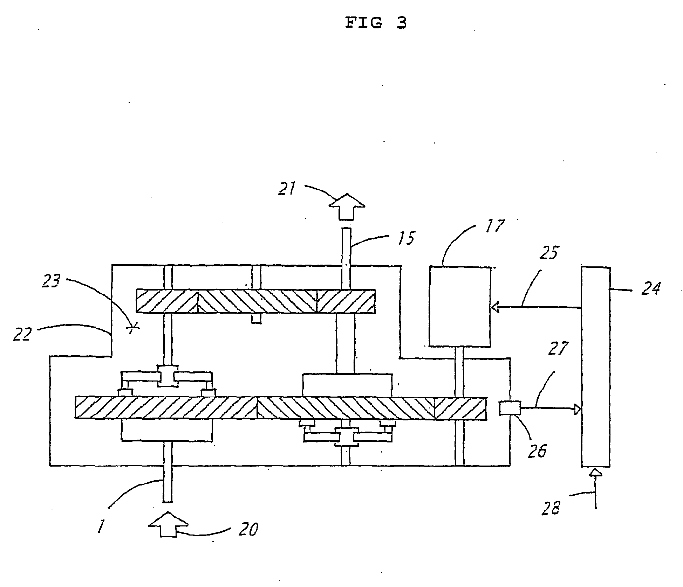

Figure 3 is a diagram of the assembly of the preferred embodiment shown in Figures 1 and 2, delineating its location within a housing (22) and showing directions for the electronic control of this embodiment.

That diagram shows the power input, by means of an arrow (20) in the axle (1), and also shows the power output, regulated in torque and rotation speed in the axle (15), by means of an arrow (21). Within the housing (22) it is advisable the existence of a lubricant fluid (23), in order to reduce the wear and the overheating of the mechanism. It is also advisable to place bearings in all the parts that require it, and stops in the axles that run through the housing (22).

The servomotor (17) can be located out of the housing, although this is not essential, because if it is an electric motor (and it is advisable) this motor can work within the lubricant fluid, provided that the fluid is an electric insulator. The servomotor (17) can be automatically regulated by an electronic control unit (24) connected to it by means of electric cables (25).

In order to attain a better efficiency of the transmission and the possibility of using it in a greater number of applications, it is advisable to have sensors (26) for the checking of the internal working of the transmission, such as sensors of rotation of the pieces, sensors of the temperature of the lubricant fluid, etc... The signal of the sensors can be sent by means of electric cables (27) to the electronic control unit (24). The electronic control unit can also receive additional information, by means of electric or electronic signals (28), which may vary, depending on the application. For example, for industrial use the signals can refer to the rotation speed of the engine and the commands given by the operator. For automotive use the signals can refer to the rotation speed of the engine, the speed of the vehicle, the signal of acceleration, etc...

In the previous explanation it has been shown, that the main advantages of this transmission are: the possibility of transmitting high torques and high rotation speeds, the possibility of fulfilling the requirements of operation or the commands of an operator, and the diversity of possible applications.

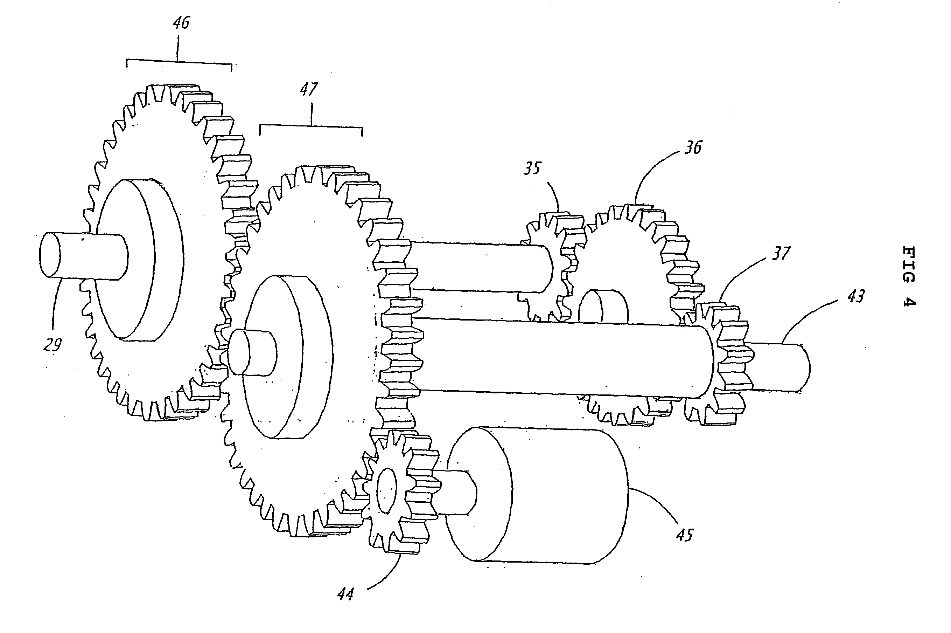

Figure 4 shows a perspective view of the assembly of another preferred embodiment of the mechanism of continuously variable transmission of torque and speed of rotation, in which you can see the general arrangement of the mechanism. This mechanism is characterized by two planetary gear sets (46 and 47) and which have gear teeth on their external perimeters, three gears for the equalization of the sense of rotation (35, 36 and 37), a servomotor (45), planetary carriers (33 and 39) can be seen. That is to say: looking at the plane perpendicular to the ring gear axles (32 and 42), both planetary carriers are on the same side.

The operation of the mechanism is the following:

The torque and speed of rotation that are desired to be transformed, in a continuously variable way, are received by axle (29), which is joined together or makes up one piece with the solar gear (30). The rotation of the solar gear (30) is transmitted to the planetary carriers (31), which are located on its periphery. The number of those planetary gears may vary. There may be one or several planetary gears, however it is generally advisable to have three or four planetary gears in order to attain an adequate distribution of the force transmitted to them. The planetary gears (31) mesh with the ring gear internal teeth (32), which are pushed in the direction of the tangential force imparted to them by the above-mentioned planetary gears. The tendency of rotation of the ring gear (32) is opposed to the tendency of rotation of the ring gear (42). The reason for this opposition will be seen herein below.

When the planetary gears (31) encounter a support on the internal teeth of the ring gear (32), they rotate the planetary carrier (33), the axle (34) and the gear (35). Those three components are joined together. It is advisable to make gear (35) removable.

The gear (35) transmits its sense of rotation to gear (37) by means of gear (36), and this way, the axles (38 and 34) rotate in the same sense of rotation, observed on the same plane.

The axle (38) is tubular and rotates the planetary carrier (39) that is joined to it or makes up one piece.

The rotation of the planetary carrier (39) is transmitted to the planetary gears (40), which mesh with the internal teeth of the ring gear (42), which have a tendency to rotate in the direction of the tangential force, imparted by these planetary gears. The tendency of rotation of the ring gear (42) is opposed to the tendency of rotation of the ring gear (32), because the sense of rotation of axle (34) and the sense of rotation of axle (38) have been made to be the same. The opposition of the tendencies of rotation of the ring gears (32 and 42) causes that both ring gears function as supports of the planetary gears (31 and 40). In this way, when the planetary gears (40) encounter a support on the internal teeth of the ring gear (42), they rotate the solar gear (41) and the output axle (43) that is joined together or is considered to make up one piece with this solar gear.

The output axle (43) passes freely through the tubular axle (38) and the gear (37), in order to make easier the placing of an engine on the side of the axle (29), although this space might not be necessary in certain applications, in which the axle (38) does not need to be tubular and axles (29 and 43) are on the same side.

As the person skilled in the art will readily understand, when the ring gears (32 and 42) are not rotating, the reduction carried out by the planetary gear set (46) is counteracted by the multiplication carried out by the planetary gear set (47), and so, in that case the transmission ratio between the input axle (29) and the output axle (43) is 1: 1.

So far, we have considered that the gears (35 and 37) have the same diameter and the same number of teeth. This may however vary, if desired, and this way the magnitude of the transmission ratio between the axles (29 and 43) is modified. Now, the magnitude of the transmission ratio between the axles (29 and 43) may be modified in a continuously variable way, rotating the of the transmission ratio between the axles (29 and 43) is modified. Now, the magnitude of the transmission ratio between the axles (29 and 43) may be modified in a continuously variable way, rotating the ring gears (32 and 42), by means of gear (44), which is rotated in one sense or the opposite sense of rotation by the servomotor (45).

The sense of rotation and the speed of rotation of this servomotor may be regulated automatically, depending on the use intended for the mechanism.

Although the characteristics of working of this second preferred embodiment are different from those of the first embodiment, both embodiments can have the same general constructive characteristics and accessories, and also the same applications. The differences between these two embodiments are the ones that define their use, depending on the specific applications intended for them.

## Claims

1. A mechanism that transmits torque and speed of rotation from an input axle to an output axle in a continuously variable way, comprising two planetary gear sets (18, 19; 46, 47) arranged on parallel axes, said planetary gear sets having teeth on the external perimeters of their ring gears (4, 13; 32, 42) that mesh one with another on their external perimeters, in such a way that if one of said ring gears rotates in one sense, the other of said ring gears rotates in the opposite sense, affecting the rotations of the other pieces that make up each planetary gear set, said pieces including for each planetary gear set a solar gear (2, 11; 30, 41), planetary gears (3, 12; 31, 43) and a planetary carrier (5, 14; 33, 39), making, in this way, a continuous variation of the transmission ratio existing between two central axles of the above mentioned planetary gear sets,
**characterized in that** said central axles of the planetary gear sets-rotate in the same sense of rotation, by means of a mechanical arrangement of three gears (7, 8, 9; 35, 36, 37) of the same or different diameter.

2. A mechanism, according to Claim 1, **characterized by** the fact that it additionally comprises a servomotor (17, 45) that rotates the ring gears of the planetary gear sets, by means of a gear, modifying the transmission ratio existing between the central axles of the planetary gear sets.

3. A mechanism according to Claim 2, **characterized by** the fact that it has, additionally, an automatic control unit (24) that governs the torque and rotation speed of the servomotor.

## Patentansprüche

1. Ein Mechanismus, welcher das Drehmoment und die Rotationsgeschwindigkeit auf eine kontinuierlich variable Art von einer Eingangsachse an eine Ausgangsachse überträgt, wobei dieser zwei Planetengetriebesätze (18, 19; 46, 47) umfasst, die auf parallen Achsen angeordnet sind, wobei die besagten Planetengetriebesätze Zähne auf den äußeren Umfängen von deren Zahnkränzen (4, 13; 32, 42) besitzen, die auf deren äußeren Umfängen derart ineinandergreifen, dass, falls einer der besagten Zahnkränze sich in einer Richtung dreht, sich der andere der besagten Zahnkränze in der entgegengesetzten Richtung dreht, wobei die Rotationen der anderen Teile beeinflusst werden, welche jeden Planetengetriebesatz bilden, wobei die besagten Teile für jeden Planetengetriebesatz ein zentrales Ritzel (2, 11; 30, 41), Planetenritzel (3, 12; 31, 43) und einen Planetenträger (5, 14; 33, 39) einschließen, wobei auf diese Weise eine kontinuierliche Variation des Übersetzungsverhältnisses gebildet wird, das zwischen zwei zentralen Achsen der oben erwähnten Planetengetriebesätze besteht, **dadurch gekennzeichnet, dass** die besagten zentralen Achsen der Planetengetriebesätze sich mittles einer mechanischen Anordnung von drei Ritzeln (7, 8, 9; 35, 36, 37) mit demselben oder unterschiedlichen Durchmessern in derselben Rotationsrichtung drehen.

2. Ein Mechanismus nach Anspruch 1, **dadurch gekennzeichnet, dass** dieser zusätzlich einen Servomotor (17, 45) umfasst, welcher die Zahnkränze der Planetengetriebesätze mittels eines Ritzels dreht, wobei das Übersetzungsverhältnis geändert wird, das zwischen den zentralen Achsen der Planetengetriebesätze besteht.

3. Ein Mechanismus nach Anspruch 2, **dadurch gekennzeichnet, dass** dieser zusätzlich eine automatische Steuereinheit (24) besitzt, welche das Drehmoment und die Rotationsgeschwindigkeit des Servomotors regelt.

## Revendications

1. Un mécanisme transmettant couple et vitesse de rotation depuis un axe d'entrée vers un axe de sortie de manière continuellement variable, comprenant deux arbres coaxiaux planétaires (18, 19; 46, 47) disposés le long d'axes parallèles, dits planétaires, disposant de dents sur le périmètre extérieur de leurs anneaux (4, 13; 32, 42) qui s'emboitent l'une avec l'autre sur leur périmètre extérieur , de sorte que si l'un desdits engrenages tourne dans un sens, l'autre engrenage tourne dans le sens contraire, affectant ainsi les rotations des autres pièces qui composent chaque arbre planétaire, à savoir un couple solaire (2, 11; 30, 41), des planétaires (3, 12; 31, 43) et un porte satellite (5, 14; 33, 39) créant, de la sorte, une variation continue du ratio existant entre les deux axes centraux des arbres planétaires mentionnés ci-dessus , **se caractérisant par le fait que** les axes centraux de ces arbres planétaires tournent dans le même sens de rotation, par le biais d'une combinaison mécanique des trois arbres (7, 8, 9;35, 36, 37) d'un diamètre identique ou différent.

2. Un mécanisme, selon la revendication 1 **caractérisé par le fait qu'**il comprend additionellement un servomoteur (17, 45) qui fait tourner les anneaux de l'arbre planétaire, par le biais d'un système, modifiant le ratio de transmission existant entre les axes centraux des arbres planétaires.

3. Un mécanisme, selon la revendication 1 **caractérisé par le fait qu'**il dispose, additionnellement, d'une unité de contrôle automatique (24), qui gouverne le couplage et la vitesse de rotation du servomoteur.
